# EUROPÄISCHE PATENTSCHRIFT

(11) **EP 0 967 041 B1**
(45) Veröffentlichungstag und Bekanntmachung des Hinweises auf die Patenterteilung: **18.12.2002**
(21) Anmeldenummer: 99108902.0
(22) Anmeldetag: 05.05.1999
(51) Int. Cl.: B23D 55/04, B23D 55/08, B23D 59/00, B23Q 1/68

(54) **Verfahren und Vorrichtung zum Führen des Sägebandes einer Bandsägemaschine**
Method and device for guiding the bandsaw blade
Procédé et dispositif pour le guidage d'une lame de scie à ruban

(30) Priorität: 26.06.1998 DE 19828589
(43) Veröffentlichungstag der Anmeldung: 29.12.1999
(73) Patentinhaber: KEURO Besitz GmbH & Co. EDV-Dienstleistungs KG, D-77855 Achern-Gamshurst (DE)
(72) Erfinder: Stolzer,Armin, 77830 Bühlertal (DE)
(74) Vertreter: Kaiser, Magnus, Dipl.-Phys.

(56) Entgegenhaltungen:
- DE-U- 9 214 430
- FR-A- 2 417 375
- GB-A- 2 041 822
- US-A- 5 299 480

## Beschreibung

Die Erfindung betrifft ein Verfahren zum Führen des schneidenden Trums eines Sägebandes im Schnittbereich des zu zertrennenden Werkstückmaterials bei einer Bandsägemaschine, bei der das Werkstückmaterial für den auf den schneidenden Arbeitsgang folgenden Sägebandrückhub auf der Materialzufuhrseite oder der Materialabfuhrseite von der Schnittebene beabstandet wird, wobei das schneidende Trum des Sägebandes während des schneidenden Arbeitsganges in der Schnittebene gehalten wird.

Entsprechend betrifft die Erfindung ferner eine Vorrichtung zum Führen des Sägebandes im Schnittbereich beidseits des zu zertrennenden Werkstückmaterials bei einer Bandsägemaschine mit zufuhr- oder abführseitiger Beabstandung des Werkstückmaterials von der Schnittebene für den auf den schneidenden Arbeitsgang folgenden Sägebandrückhub, wobei das Sägeband durch von neben dem Werkstückmaterial angeordneten Führungsarmen getragene Führungen während des schneidenden Arbeitsganges in der Schnittebene gehalten ist.

Als Bandsägemaschinen der vorgenannten Art kommen grundsätzlich sowohl sogenannte Horizontalbandsägen einschließlich solcher mit schwenkbarem Oberteil als auch sogenannte Vertikalbandsägen in Frage. Sie dienen dem Ablängen von Abschnitten eines metallenen Werkstückmaterials, das üblicherweise in Form von einzelnen Metallstangen oder Metallstangenbündeln vorliegt, aber auch andere zur Verarbeitung auf solchen Bandsägemaschinen geeignete Formen haben kann.

Eine solche Bandsäge ist aus der US 5,299,480 bekannt.

Das Werkstückmaterial wird dem Schnittbereich der Bandsägemaschine, in welchem es auf einem Werkstücktisch aufliegt, über eine dem Werkstücktisch vorgeschaltete Zufuhrbahn zugeführt, und es werden die abgetrennten Abschnitte auf der der Zufuhrbahn gegenüberliegenden Seite der Schnittebene durch geeignete Mittel fortgeräumt, wobei hierfür eine sehr einfache Form darin bestehen kann, daß mit dem Vorschub des Werkstückmaterials um den Betrag des als nächstes abzutrennenden Abschnittes der vorher abgetrennte Abschnitt weitergeschoben wird.

Bei Bandsägemaschinen der in Rede stehenden Art wird üblicherweise das Werkstückmaterial für den schneidenden Arbeitsgang durch ein quer zur Materialvorschubrichtung öffen- und schließbares, jedoch in Materialvorschubrichtung ortsfestes Spannbackenpaar gehalten, das bezogen auf die Vorschubrichtung des Werkstückmaterials vor oder hinter der Schnittebene angeordnet sein kann, je nachdem, ob der Materialvorschub durch ein auf der Zufuhrseite des Materials angeordnetes, öffen- und schließbares und in Materialvorschubrichtung verschiebbares Spannbackenpaar erfolgt oder durch ein solches Spannbackenpaar, das auf der Abfuhrseite des Materials angeordnet ist und den Materialvorschub dadurch bewirkt, daß es nach Beendigung eines sägenden Arbeitsganges und Rückhub des Sägebandes die Schnittebene durchquert und zum Vorschub das dortige Materialende ergreift. Auch Abänderungen dieser Verfahrensweisen sind möglich und bekannt.

Im erstgenannten Falle von auf der Zufuhrseite angeordneten Vorschubbacken sind die in Vorschubrichtung ortsfesten Spannbacken auf der in Vorschubrichtung hinter der Schnittebene gelegenen Seite angeordnet. Im zweitgenannten Falle von auf der Materialabfuhrseite angeordneten, das Material zum Vorschub ziehenden Spannbacken sind die in Vorschubrichtung ortsfesten Backen in Vorschubrichtung des Materials gesehen vor der Schnittebene angeordnet. Für alle vorgenannten Bauformen einschließlich ihrer Variationen gilt die zu beschreibende Erfindung.

Wie eingangs geschildert, wird bei den beschriebenen Metallbandsägemaschinen das über zwei Laufräder endlos umlaufende Sägeband im Schnittbereich neben dem Werkstückmaterial durch Sägebandführungen geleitet und in die Schnittebene geschwenkt, deren Richtung von der Umlaufebene des Sägebandes abweicht, um eine endlose Zu- und Abfuhr des Werkstückmaterials zu gewährleisten. Die Sägebandführungen, die zweckmäßig so nahe wie möglich neben dem Werkstückmaterial positioniert sind, weisen im allgemeinen beidseits des Sägebandes Hartmetallgleitstücke und senkrecht dazu gegen den Sägebandrücken ebenfalls Hartmetallgleitstücke oder Laufrollen auf. Hierbei ist üblicherweise eine der beiden seitlichen Bandführungen fest am zugeordneten Führungsarm angebracht, während die gegenüberliegende Bandführung entweder auf einen festen Abstand gegenüber der erstgenannten seitlichen Bandführung eingestellt ist oder mittels einer Feder- oder Hydraulikkraft gegen das Sägeband gedrückt wird, um das Sägeband möglichst spielfrei zwischen den beiden seitlichen Bandführungen zu leiten.

Ist nun ein schneidender Arbeitsgang beendet, so muß für den Rückhub des Sägebandes dessen schneidendes Trum rückwärts wieder durch den Schnittspalt bewegt werden. Dies führt dazu, daß die seitlichen Schneidkanten der Zähne des Sägebandes am Werkstückmaterial entlanggleiten und dort insbesondere bei hohen Bandgeschwindigkeiten einem Verschleiß unterzogen sind. Außerdem besteht beim Schneiden von Materialbündeln immer die Gefahr, daß der Sägebandrücken beim Rückhub des Sägebandes an einem etwas vorstehenden oder sich in der Lage verändernden Materialstück hängen bleibt. Daher sind oftmals die Führungsarme mit Fühlern ausgestattet, die das Herausrutschen des Sägebandes aus den Bandführungen feststellen, um größeren Schaden am Sägeband zu vermeiden.

Um den vorgenannten Problemen zu begegnenen, ist es auch schon bekannt, das Werkstückmaterial nach Beendigung des schneidenden Arbeitsganges entweder auf der Zufuhrseite oder auf der Abfuhrseite der Schnittebene von dieser etwas zu beabstanden bzw. abzurücken. Welche dieser beiden Möglichkeiten angewendet wird, hängt davon ab, ob sich die in Materialvorschubrichtung bewegbaren Spannbacken auf der Materialzufuhrseite oder auf der Materialabfuhrseite der Schnittebene befinden, denn die Beabstandung des Materials erfolgt eben durch diese in Vorschubrichtung des Materials bewegbaren Spannbacken.

Die Beabstandung des Materials auf einer Seite der Schnittebene führt dazu, daß das schneidende Trum des Sägebandes beim Sägebandrückhub wenigstens auf einer Seite frei vom Werkstückmaterial ist, so daß es eventuell vorstehenden Kanten ausweichen kann und der Verschleiß der Seitenkanten der Zähne des Sägebandes gemindert ist. In Verbindung insbesondere mit heute vielfach auf die Zähne des Sägebandes aufgelöteten Hartmetallschneiden ist auch dies jedoch nicht mehr ausreichend. Vielmehr kommt einem berührungslosen Rückhub des Sägebandes eine immer größere Bedeutung zu.

Man könnte nun einen berührungslosen Sägebandrückhub dadurch erreichen, daß das Werkstückmaterial nach dem schneidenden Arbeitsgang auf beiden Seiten der Schnittebene von dieser beabstandet wird (siehe US 5,299,480). Das würde jedoch bedeuten, daß auch das in Vorschubrichtung des Werkstückmaterials ortsfeste Spannbackenpaar nunmehr in Materialvorschubrichtung verstellbar ausgebildet sein müßte. Dies würde jedoch einen erheblichen bautechnischen Aufwand und erhöhten Platzbedarf erfordern.

Aufgabe der Erfindung ist es daher, Verfahren und Vorrichtung der eingangs genannten Art dahingehend weiter auszugestalten, daß die Rückbewegung des Sägebandes nach dem schneidenden Arbeitsgang in einfacher, platzsparender und kostengünstiger Weise frei von jeder Berührung mit dem Werkstückmaterial erfolgt.

Diese Aufgabe wird durch den Gegenstand von Anspruch 1 oder Anspruch 5 gelöst.

Diese Maßnahmen haben die Wirkung, daß ausgehend von einer im Anschluß an den scheidenden Arbeitsgang erfolgenden einseitigen Beabstandung des Werkstückmaterials gegenüber der Schnittebene nunmehr das Sägeband durch eigene Verstellung in Richtung dieser Materialbeabstandung beidseits vom Werkstückmaterial freikommt. Dabei ist selbstverständlich, daß bei allen Ausführungen der Erfindung die Größe der Verstellung des schneidenden Trums des Sägebandes geringer bemessen wird als die Stellgröße für die Beabstandung des Werkstückmaterials von der Schnittebene. Diese Verstellung des Sägebandes läßt sich jedoch ohne zusätzlichen Platzbedarf und mit vergleichsweise sehr einfachen Mitteln bewerkstelligen.

Ausgehend von der eingangs genannten Vorrichtung ist die Aufgabe entsprechend erfindungsgemäß dadurch gelöst, daß zum Rückhub des Sägebandes wenigstens eine der Führungen senkrecht zur Schnittebene von dieser fort in Richtung auf das beabstandete Werkstückmaterial verstellbar ist. Hier zeigt sich, daß es lediglich einer geringfügigen, einfach zu bewerkstelligenden Verstellung an den Sägebandführungen bedarf, um die erfindungsgewollte Wirkung zu erzielen. Dabei genügt grundsätzlich die Versteilbarkeit einer der beiden Sägebandführungen, weil schon die dadurch bewirkte Schrägstellung des Sägebandes ausreicht, um es vom Werkstückmaterial freikommen zu lassen. Selbstverständlich können jedoch auch beide Führungen verstellbar sein, um die Größe der Stellbewegung der einzelnen Führung gering zu halten. Ein zusätzlicher Platzbedarf verbindet sich mit dieser erfindungsgemäßen Maßnahme nicht, da die Sägebandführungen ohnehin in der in Frage kommenden Richtung vollkommen frei sind.

Mehr ins einzelne kann nach einem ersten Lösungsweg bei einer Vorrichtung, bei der sich das Sägeband innerhalb der Führungen zwischen Hartmetallgleitstücken bewegt, erfindungsgemäß vorgesehen sein, daß die Hartmetallgleitstücke je am Ende von in den Führungen gelagerten Stellmitteln angeordnet sind, und daß die Stellmittel zwischen Anschlägen äquidistant verstellbar sind. Hier können als Stellmittel hydraulisch oder pneumatisch betätigbare Zylinder-Kolben-Aggregate vorgesehen sein. Auf diese Weise werden also die Gleitführungen für das Sägeband vor dessen Rückhubbewegung lediglich um einen geringen Betrag, für den 0,5 mm bis 1,0 mm ausreichend sind, von der Schnittebene fort verschoben, indem die Zylinder-Kolben-Aggregate mit Hilfe der automatischen Steuerung der Bandsägemaschine entsprechend beaufschlagt werden. Nach Abschluß des Rückhubes des Sägebandes erfolgt dann wieder die umgekehrte Beaufschlagung der Zylinder-Kolben-Aggregate, um das Sägeband für den nächsten schneidenden Arbeitsgang in der Schnittebene zu führen.

Nach einer anderen Bauform, bei der wenigstens eine der Führungen zusammen mit den sie tragenden Führungsarm im wesentlichen in Bewegungsrichtung des schneidenden Trums des Sägebandes an einer Führungsbahn des Gestells der Bandsägemaschine verstellbar ist, kann die erfindungsgemäße Problemlösung darin bestehen, daß der verstellbare Führungsarm durch eine in Richtung auf das beabstandete Werkstückmaterial wirksamen Kraft beaufschlagbar ist, und daß für den Rückhub des Sägebandes dieser Führungsarm durch die Kraft verschwenkbar ist. Dabei kann als eine denkbare Umsetzung dieses Gedankens vorgesehen sein, daß der Führungsarm ständig durch die Kraft beaufschlagt ist, und daß für den Rückhub des Sägebandes das Führungsspiel dieses Führungsarmes vergrößerbar ist.

Diese Maßnahmen haben die Wirkung, daß durch Vergrößerung des Führungsspiels des beweglichen Führungsarmes dieser gegenüber seiner Führungsbahn eine gewisse Bewegungsfreiheit hat und innerhalb diese durch Einwirkung der genannten Kraft etwas gekippt wird, woraus sich die erfindungsgemäße Verstellung der Sägebandführung und damit des Sägebandes ergibt. Selbstverständlich kann auch hier das Ein- und Ausschalten der Mittel zur Änderung des Führungsspiels automatisch durch die Steuerung des Arbeitsablaufes der Bandsägemaschine erfolgen, so, daß der Führungsarm jeweils für den schneidenden Arbeitsgang mit seiner Führungsbahn möglichst spielfrei verbunden ist, während für den Rückhub des Sägebandes das Führungsspiel vergrößert wird.

Ist bei der eben beschriebenen Bauform das Werkstückmaterial während des Schnittes neben der Schnittebene durch ein Spannbackenpaar gehalten, das parallel zur Schnittebene durch Bewegung wenigstens einer der Spannbacken öffen- und schließbar aber in Richtung senkrecht zur Schnittebene ortsfest ist, und sind dabei die bewegbare Spannbacke sowie der verstellbare Führungsarm einander zugeordnet, so kann vorgesehen sein, daß die bewegbare Spannbacke wenigstens mittelbar das Widerlager für die am Führungsarm angreifende Kraft bildet. Hintergrund ist hier, daß in an sich bekannter Weise die bewegbare Spannbacke und der verstellbare Führungsarm miteinander gekoppelt sind, um den gegenseitigen Abstand der beiden Bandführungsarme auf den Querschnitt des zu bearbeitenden Werkstückmaterials einzustellen, welcher Querschnitt sich ja gleichermaßen in der Arbeitsstellung der bewegbaren Spannbacke wiederspiegelt.

Was die auf den verstellbaren Führungsarm einwirkende Kraft betrifft, so kann diese eine Federkraft sein, die zweckmäßigerweise durch eine Druckfeder gebildet ist.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: die Frontansicht einer Bandsägemaschine;
- Figur 2: eine Draufsicht auf die Bandsägemaschine gemäß Figur 1;
- Figur 3: eine Einzelansicht der Führung des Sägebandes im Arbeitsbereich;
- Figur 4: eine schematische Darstellung des Arbeitsablaufes im Schnittbereich der Bandsäge;
- Figur 5: die Seitenansicht des verstellbaren Führungsarmes gemäß Figur 1 bis 3, teilweise geschnitten;
- Figur 6: eine Schnittansicht des unteren, das Sägeband führenden Endes des Führungsarmes gemäß Figur 5;
- Figur 7 und 8: die Schnittansicht VII-VII aus Figur Figur 6 in zwei Arbeitsstellungen;
- Figur 9: die Seitenansicht des bewegbaren Führungsarmes gemäß Figur 1 bis 3 nach einer anderen Bauform, teilweise geschnitten und
- Figur 10: eine Schnittansicht des unteren bandführenden Endes des Führungsarmes gemäß Figur 9.

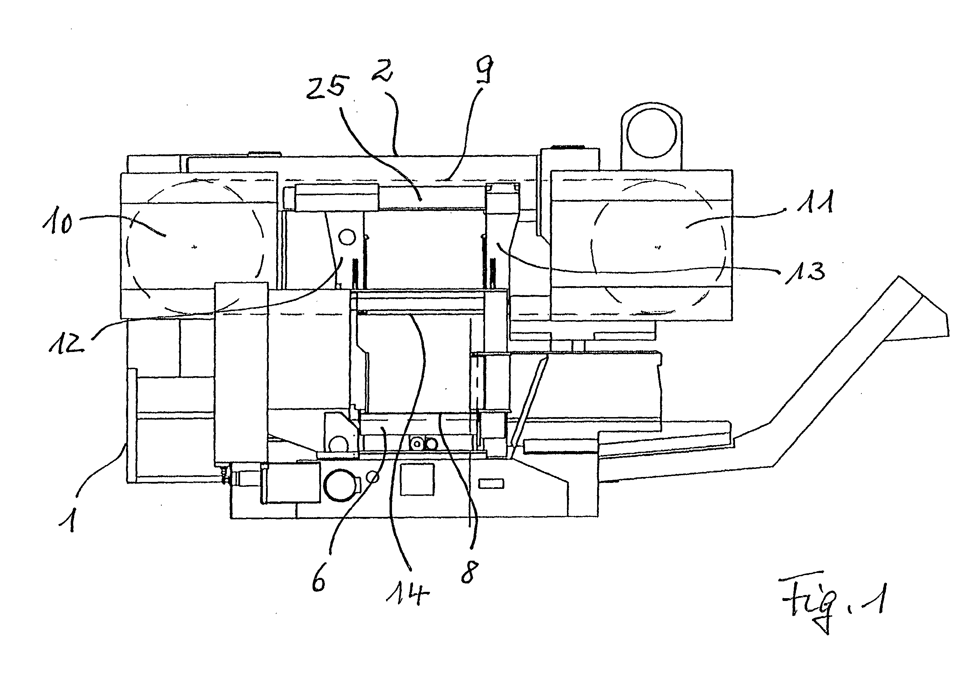

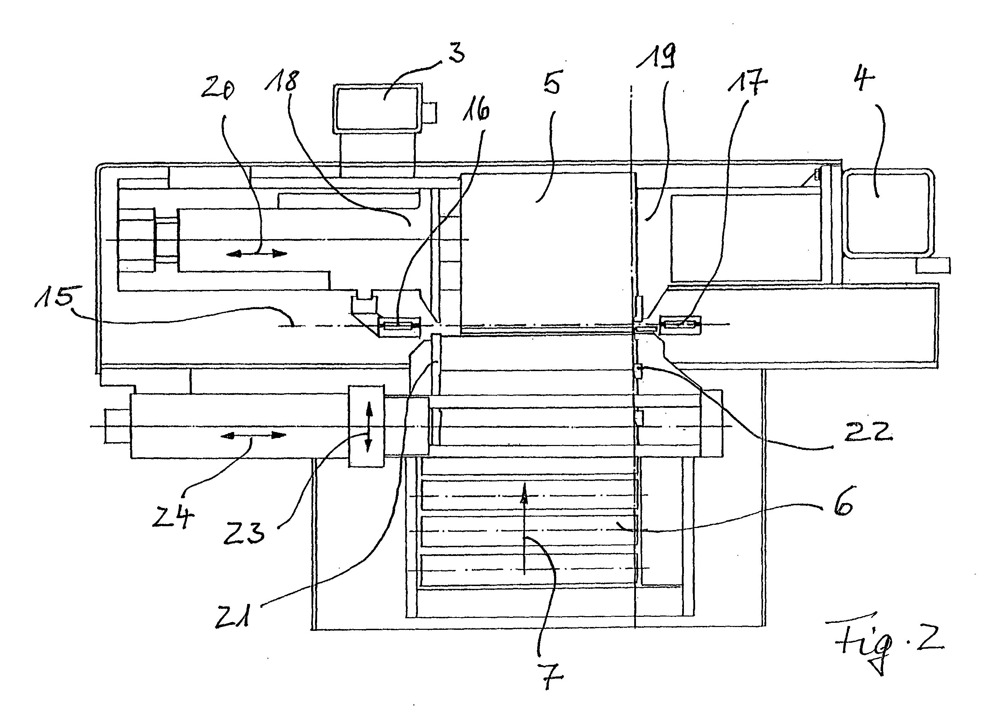

Wie aus den Figuren 1 und 2 ersichtlich, weist die dort dargestellte Bandsägemaschine ein Maschinengestell 1 auf, gegenüber dem ein Sägenoberteil 2 über Führungssäulen 3, 4 vertikal verschiebbar ist.

Das Maschinengestell 1 weist einen Werkstücktisch 5 zur Auflage des nicht dargestellten Werkstückmaterials auf, dem eine aus Rollen 6 gebildete Zufuhrbahn vorgeschaltet ist, über die das Werkstückmaterial in Richtung des Pfeiles 7 dem Arbeitsbereich der Bandsägemaschine zugeführt wird. Die Oberkante 8 der Rollen 6 liegt in der gleichen Ebene wie die Oberfläche des Werkstücktisches 5.

Im Sägenoberteil 2 läuft ein Sägeband 9 über Umlenkräder 10, 11 endlos um, wobei im vorliegenden Falle das Umlenkrad 11 entgegen dem Uhrzeigersinn drehend angetrieben ist. Die Drehachsen der Umlenkräder 10, 11 sind bei der dargestellten Ausführungsform senkrecht zur Darstellung gemäß Figur 1 bzw. parallel zur Zeichenebene der Figur 2 gerichtet, so daß an den Umlenkrädern entsprechend auch das Sägeband 9 senkrecht zur Zeichenebene der Figur 1 bzw. parallel zur Zeichenebene der Figur 2 steht. Damit nun das Sägeband im oberhalb des Werkstücktisches 5 gelegenen Schnittbereich in eine zur Oberfläche des Werkstücktisches 5 senkrechte Lage geschwenkt wird, dienen noch näher zu beschreibende Umlenkführungen, die von den unteren, freien Enden von Führungsarmen 12, 13 getragen werden, die am Sägenoberteil angeordnet sind. Diese Führungen bewirken also, daß die Schneidkante 14 des Sägebandes 9 zwischen den Führungsarmen 12, 13 bezogen auf Figur 1 nach unten auf das nicht dargestellte Werkstückmaterial gerichtet ist. Die dadurch gebildete Schnittebene 15 steht auf der Oberfläche des Werkstücktisches 5 senkrecht und ist in Figur 2 strichpunktiert eingezeichnet. Dort sind auch die bereits erwähnten Sägebandführungen 16, 17 in vereinfachter Darstellung ersichtlich.

Während des schneidenden Arbeitsganges wird das Werkstückmaterial im vorliegenden Falle durch Spannbacken 18, 19 gehalten, die möglichst nahe bei der Schnittebene 15 bezogen auf die durch den Pfeil 7 dargestellte Materialvorschubrichtung hinter dieser Schnittebene 15 angeordnet sind. Dabei ist die Spannbacke 19 fest mit dem Maschinengestell 1 verbunden, während die Spannbacke 18 in Richtung des Doppelpfeiles 20 öffen- und schließbar ist.

Bezogen auf die durch den Pfeil 7 repräsentierte Materialvorschubrichtung vor der Schnittebene 15 sind ferner am Maschinengestell 1 Vorschubspannbacken 21, 22 angeordnet, die gemeinsam in der durch den Doppelpfeil 23 angedeuteten Weise parallel zur Vorschubrichtung am Maschinengestell 1 hin- und herschiebbar sind und von denen außerdem die Vorschubbacke 21 in der durch den Doppelpfeil 24 angedeuteten Weise gegenüber der Spannbacke 22 verschiebbar ist, um das Spannbackenpaar 21, 22 von der Offenstellung in die Schließstellung bzw. umgekehrt zu bewegen.

Die Arbeitsweise der soweit beschriebenen Bandsägemaschine verläuft kurzgesagt wie folgt: Das auf den Rollen 6 liegende Werkstückmaterial wird durch Schließen der Vorschubbacken 21, 22 in Richtung des Pfeiles 24 ergriffen und dann durch deren Bewegung in Richtung des Pfeiles 7 bzw. 23 soweit nach vorne bewegt, daß es um die Größe des abzutrennenden Materialstückes durch die Schnittebene 15 tritt. Nunmehr wird das abzuschneidende Materialstück durch die Spannbacken 18, 19 ergriffen und für den schneidenden Arbeitsgang festgehalten, der bei laufendem Sägeband dadurch geschieht, daß das Sägenoberteil 2 bezogen auf Figur 1 von oben nach unten bewegt wird.

Während des sägenden Arbeitsganges können die Vorschubbacken 21, 22 geöffnet und entgegen der Pfeilrichtung 7 um die Größe des als nächstes abzutrennenden Werkstückmaterials zurückbewegt werden, um das Werkstückmaterial vor Beendigung des schneidenden Arbeitsganges erneut zu greifen.

Nach Beendigung des schneidenden Arbeitsganges, wenn also die Schneidkante 14 des Sägebandes 9 die Oberfläche des Werkstücktisches 5 erreicht hat, ziehen die Vorschubbacken 21, 22 das von Ihnen gefaßte Werkstückmaterial ein kleines Stück entgegen der Richtung des Pfeiles 7 zurück, um dem Sägeband 9 Platz für den Rückhub zu machen, der dadurch stattfindet, daß das Sägenoberteil 2 wieder in die aus Figur 1 ersichtliche obere Position zurückgefahren wird. Nunmehr schieben die Vorschubbacken 21, 22 das Werkstückmaterial wieder um den Betrag des als nächstes abzutrennenden Materialstückes vor und es beginnt der beschriebene Arbeitsgang erneut.

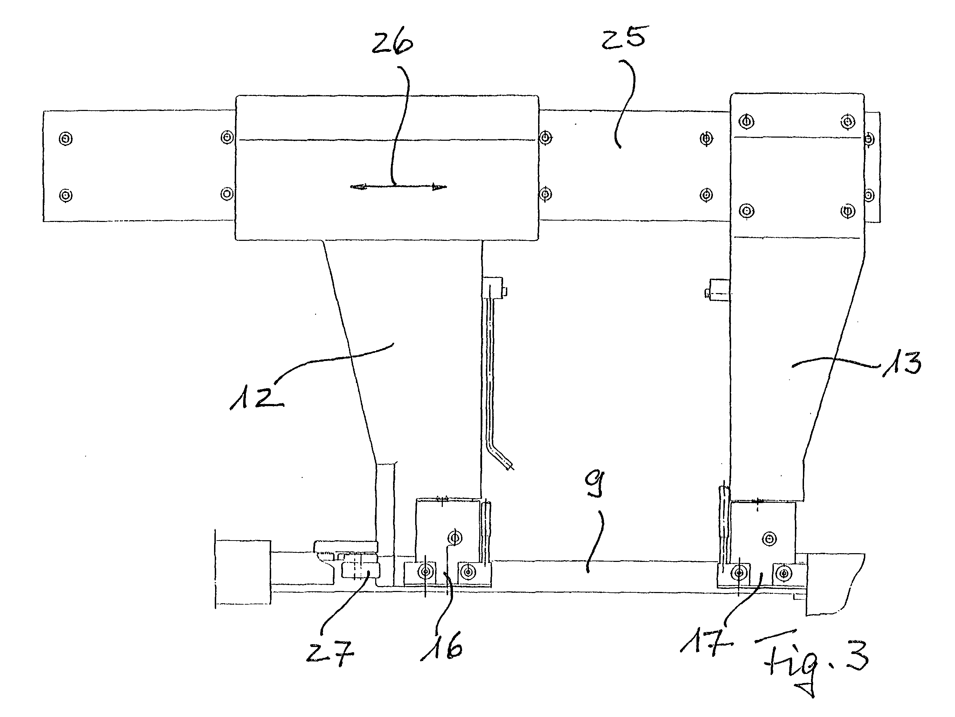

Figur 3 zeigt herausgezeichnet noch einmal die Bandführungsarme 12, 13, wobei ersichtlich ist, daß der Bandführungsarm 13 fest mit einer am Sägenoberteil 2 angeordneten Führungsbahn 25 verbunden ist, während der Führungsarm 12 an dieser Führungsbahn 25 in Richtung des Doppelpfeiles 26 verschiebbar ist. Letzteres dient der Anpassung des gegenseitigen Abstandes der Führungsarme 12, 13 und der von diesen getragenen Sägebandführungen 16, 17 an unterschiedliche Werkstückquerschnitte so, daß die Sägebandführungen 16, 17 möglichst immer nahe neben dem Werkstückmaterial positioniert sind. Um diese Einstellung des gegenseitigen Abstandes der Führungsarme 12, 13 zu verselbständigen, ist der verstellbare Führungsarm 12 in bekannter und daher nicht näher dargestellter und beschriebener Weise mit der bewegbaren Spannbacke 18 bewegungsverbunden, so daß er immer der Stellung dieser Spannbacke folgt, die ja schlußendlich für die mit dem schneidenden Arbeitsgang verbundene Spannposition immer eine dem Werkstückquerschnitt entsprechende Stellung einnimmt.

Entsprechend der anhand Figur 1 früher erwähnten Umlaufrichtung des Sägebandes 9 läuft das aus Figur 3 ersichtliche schneidende Trum des Sägebandes 9 bezogen auf Figur 3 von links nach rechts, so daß das Sägeband vor allem durch die Sägebandführung 16 in die Schnittebene geschwenkt wird. Um diesen Vorgang zu erleichtern, ist der Bandführung 16 noch eine Leitrolle 27 vorgeschaltet.

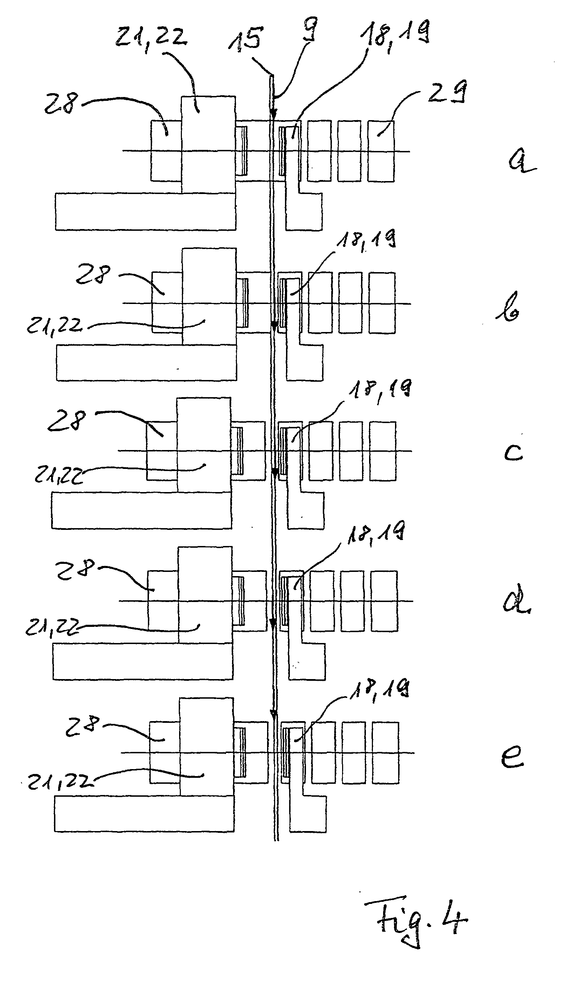

Bei der soweit beschriebenen Bandsägemaschine und deren Arbeitsweise wird also, wie erwähnt, das Werkstückmaterial am Ende des schneidenden Arbeitsganges durch Wirkung der Vorschubbacken 21, 22 etwas von der Schnittebene 15 beabstandet, um dem Sägeband für seinen Rückhub mehr Platz zu machen. Dabei ist aber der abgetrennte Werkstückabschnitt noch durch die Spannbacken 18, 19 gehalten, so daß dessen Schnittfläche unmittelbar an der Schnittebene 15 steht, so daß das Sägeband beim Rückhub an dieser Schnittfläche schleift. Um dies zu unterbinden, wird nun nach der Erfindung das Sägeband für den Rückhub in Richtung auf das beabstandete Werkstückmaterial etwas aus der Schnittebene verschoben. Dieser Vorgang ist aus der in Figur 4 schematisierten Darstellung des bereits im wesentlichen beschriebenen Arbeitsablaufes ersichtlich, wobei Figur 4 nacheinander verschiedene Arbeitsstellungen a bis e zeigt.

Gemäß Figur 4a ist das Werkstückmaterial 28 von den Vorschubbacken 21, 22 um den abzuschneidenden Betrag durch die hier als Doppellinie dargestellte Schnittebene 15 vorgeschoben und es ist das abzuschneidende Stück durch die Spannbacken 18, 19 ergriffen. Rechts neben den Spannbacken 18, 19 sind bereits vorher abgetrennte Materialstücke 29 ersichtlich, die bei fortschreitender Arbeitsweise der Maschine schrittweise nach rechts weitergeschoben werden. Das durch einen Pfeil repräsentierte Sägeband 9 steht oberhalb des Werkstückmaterials.

Figur 4b zeigt den schneidenden Arbeitsgang, bei dem sich das Sägeband 9 im Schnittspalt befindet. Bei Figur 4c ist der schneidende Arbeitsgang beendet und es ist das Werkstückmaterial 28 durch geringfügige Verschiebung nach links mit Hilfe der Vorschubbacken 21, 22 von der Schnittebene beabstandet. Gemäß Figur 4d ist nunmehr auch das Sägeband 9 um einen geringen Betrag nach links verstellt, so daß es von der Schnittfläche des gerade abgetrennten Werkstückabschnittes 29 freikommt und gleichzeitig auch von der Schnittfläche des noch zu bearbeitenden Werkstückmaterials 28 beabstandet ist. Gemäß Figur 4e hat schließlich der berührungslose Rückhub des Sägebandes 9 stattgefunden. Nunmehr kann das Werkstückmaterial 28 bei jetzt geöffneten Spannbacken 18, 19 um den Betrag des als nächstes abzutrennenden Materialstückes vorgeschoben werden und es kann nach erneutem Ergreifen des Materials durch die Spannbacken 18, 19 der nächste Arbeitsgang entsprechend Figur 4a beginnen, nachdem das Sägeband 9 wieder in die Stellung gemäß Figur 4a zurückgebracht ist.

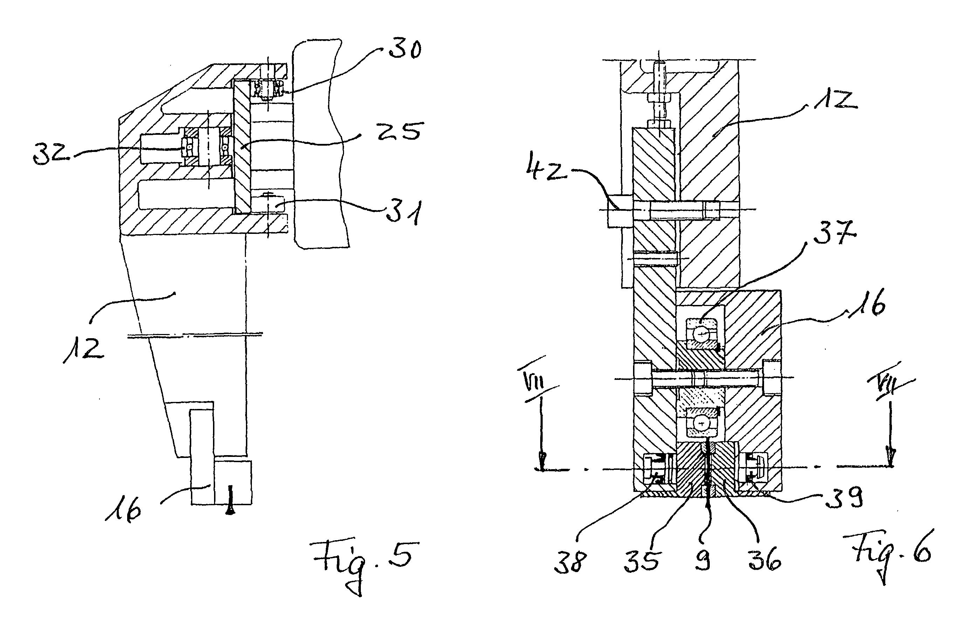

Die Figuren 5 bis 8 zeigen nun eine Möglichkeit, wie die Verstellung des Sägebandes 9 für seinen Rückhub gegenüber der Schnittebene umgesetzt werden kann. Dazu stellt Figur 5 die teilweise geschnittene Seitenansicht des Führungsarmes 12 dar, die zeigt, wie der Führungsarm über Rollen 30, 31 einerseits und 32 andererseits an der Führungsbahn 25 verfahrbar ist.

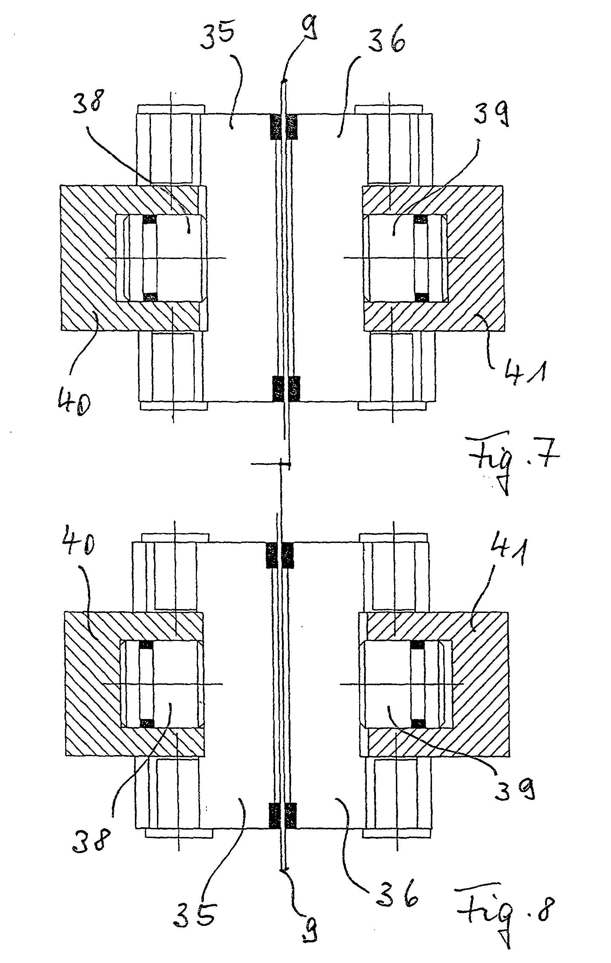

Am unteren, in Figur 6 im vergrößerten Schnitt dargestellten Ende des Führungsarmes 12 befindet sich die Sägebandführung 16. Diese enthält neben dem Sägeband 9 dieses leitende Hartmetallplatten 35, 36 sowie eine gegen den Sägebandrücken gehende Stützrolle 37.

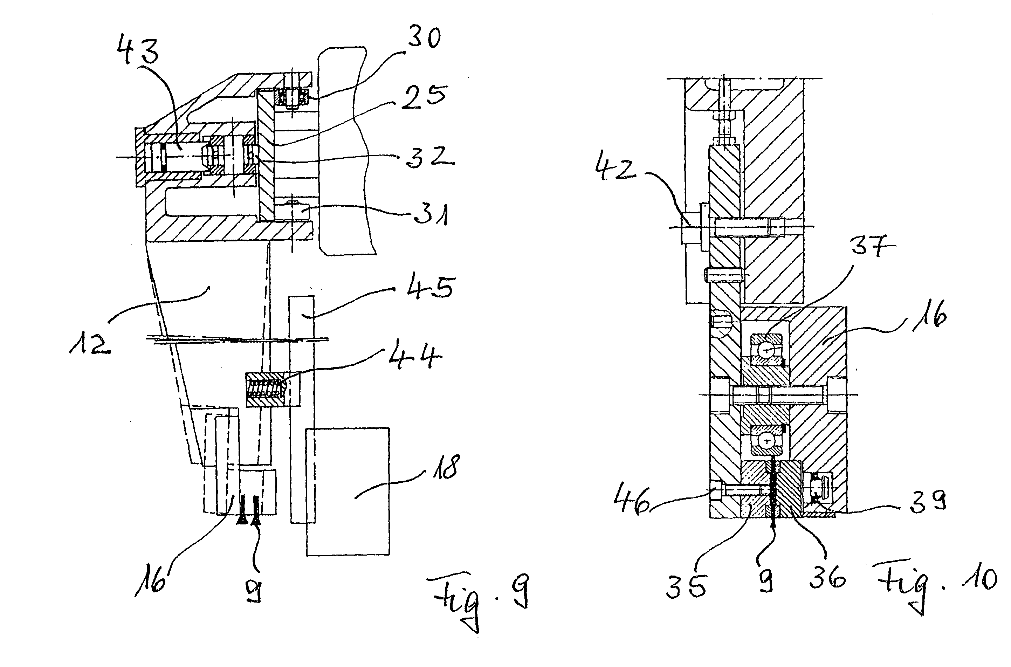

Wie aus Figur 6 ersichtlich und in den Figuren 7 und 8 noch einmal in Ausschnittvergrößerung gezeigt, sind die Hartmetallplatten 35, 36 durch die Kolben 38, 39 von in der Führung 16 gebildeten Zylinder-Kolben-Aggregaten in Richtung auf das Sägeband 9 beaufschlagt, wobei die Kolben 38, 39 in ihrer Axial- bzw. Bewegungsrichtung zwischen einer Vorderstellung und einer rückwärtigen Anschlagstellung bewegbar sind, so daß die Hartmetallplatten 35, 36 äquidistant zwischen bezogen auf die Figuren 5 bis 8 linken und rechten Anschlagposition hin- und hergestellt werden können. Dabei entspricht die in Figur 7 dargestellte rechte Anschlagposition der für den schneidenden Arbeitsgang gewünschten Stellung der Hartmetallplatten 35, 36, während die in Figur 8 gezeigte linke Anschlagposition der Stellung der Hartmetallplatten 35, 36 entspricht, die für den Rückhub des Sägebandes 9 entsprechend Figur 4e gelten soll.

Wie ersichtlich, ist durch die in den Figuren 5 bis 8 dargestellte Konstruktion innerhalb der Sägebandführung 16 mit geringen Mitteln eine einfache Möglichkeit zur Durchführung der Sägebandabhebung geschaffen. Es versteht sich von selbst, daß die Bewegungssteuerung für die Kolben 38, 39 durch die Steuerung des Arbeitsablaufes der Bandsägemaschine entsprechend den jeweiligen Erfordernissen mit bewerkstelligt wird.

Die Abhebung des Sägebandes 9 für dessen Rückhub nach Beendigung des schneidenden Arbeitsganges ist vorstehend nur im Zusammenhang mit der Sägebandführung 16 des Führungsarmes 12 beschrieben und an sich auch ausreichend, um das Sägeband beim Rückhub von jeder Berührung mit dem Werkstückmaterial freizumachen. Selbstverständlich kann aber eine entsprechende Konstruktion auch für die Sägebandführung 17 des Führungsarmes 13 gleichwirkend vorgesehen sein. Wie die Figuren 7 und 8 noch mehr ins einzelne erkennen lassen, können die die Kolben 38, 39 enthaltenden Zylinderkolbenaggregate 40, 41 als Einsatzteile für die Führung 16 ausgebildet sein. Im übrigen kann, wie insbesondere Figuren 5 und 6 zeigen, die Führung 16 am Führungsarm 12 in Form eines Anbauteils mit Hilfe von Schrauben 42 befestigt sein, um hier beispielsweise reparaturbedingt schnell ein auswechseln zu ermöglichen.

Die Figuren 9 und 10 zeigen ähnlich den Figuren 5 und 6 eine andersartige Möglichkeit für die Durchführung der Sägebandabhebung während des Sägebandrückhubes. Dazu ist die Führungsrolle 32 der Führung des Armes 12 mit Hilfe eines hydraulischen oder pneumatischen Kolbens gegen die Führungsbahn 25 gedrückt, um die Führung des Armes 12 normalerweise weitestgehend spielfrei zu halten. Wird jedoch die Druckbeaufschlagung des Kolbens 43 fortgenommen oder verringert, so bekommt die Führung des Armes 12 an der Führungsbahn 25 etwas Spiel, so daß der Führungsarm 12 in der in Figur 9 gestrichelt dargestellten Weise verschwenkt werden kann im Sinne der Erfindung, nämlich in Richtung auf das von der Schnittebene beabstandete Werkstückmaterial.

Um diese Schwenkbewegung für den Rückhub des Sägebandes 9 zu bewerkstelligen, greift am Führungsarm 12 eine Druckfeder 44 an, die an einem Stützarm 45 widergelagert ist, der seinerseits mit der quer zur Materialvorschubrichtung verschiebbaren Spannbacke 18 verbunden ist.

Selbstverständlich ist es hier, daß die Druckbeaufschlagung der Rolle 32 mittels des Kolbens 43 nur dann herabgesetzt wird, wenn nach dem schneidenden Arbeitsgang der Rückhub des Sägebandes 9 ansteht. Die entsprechende Steuerung der Druckbeaufschlagung des Kolbens 43 erfolgt wiederum seitens der Steuerungseinrichtung für die Bandsägemaschine.

Ist für den nächsten schneidenden Arbeitsgang das Sägeband 9 wieder auf die Schnittebene zu bringen, so wird die Rolle durch Druckbeaufschlagung des Kolbens 43 erneut gegen die Führungsbahn 25 verspannt, was zu einer Rückschwenkung des Führungsarmes 12 in die in Figur 9 ausgezeichnet dargestellte Position führt.

Figur 10 zeigt schließlich wieder das Unterende des in Figur 9 dargestellten Führungsarmes zusammen mit der Führung 16, deren Ausbildung mit der in Figur 6 dargestellten Ausbildung übereinstimmt bis auf den Umstand, daß im Falle der Figur 10 die Hartmetallplatte 35 mit Hilfe beispielsweise einer Schraube 46 fest mit der Führung 16 verbunden ist, während nur die Hartmetallplatte 36 durch ein hydraulisch oder pneumatisch beaufschlagbaren Kolben 39 gegen das Sägeband drückbar ist. Dies dient in an sich bekannter Weise jedoch nur dazu, das Sägeband 9 möglichst spielfrei zwischen den Hartmetallplatten 35, 36 zu führen.

Die Erfindung wurde anhand der Zeichnungen nur im Zusammenhang mit einem bestimmten Typ einer Bandsägemaschine erläutert. Sie ist jedoch mit Hilfe der gleichen Mittel auch bei den in der Beschreibungseinleitung im einzelnen geschilderten anderen Bandsägemaschinentypen anwendbar, insbesondere auch bei Vertikalbandsägen und solchen Bandsägemaschinen, bei denen öffen- und schließbare aber in Materialvorschubrichtung feste Spannbacken 18, 19 nicht hinter sondern in Vorschubrichtung des Materials gesehen vor der Schnittebene 15 angeordnet sind und dementsprechend die sowohl öffen- und schließbaren als auch in Materialvorschubrichtung verschiebbaren Spannbacken 21, 22 in Materialvorschubrichtung gesehen hinter der Schnittebene 15 arbeiten.

## Patentansprüche

1. Vorrichtung zum Führen eines Sägebandes (9) im Schnittbereich beidseits von zu zertrennendem, stangenförmigem Werkstückmaterial (28) aus Metall bei einer Bandsägemaschine,
wobei das auf einem Werkstücktisch (5) sowie einer diesem in Vorschubrichtung (7) des Werkstückmaterials (28) vorgeschalteten Zuführeinrichtung (6) aufliegende Werkstückmaterial (28) während des Schnittes in Vorschubrichtung (7) gesehen hinter der Schnittebene (15) zwischen wenigstens zwei quer zur Materialvorschubrichtung (7) öffenund schließbaren Spannbacken (18, 19) eingespannt ist,
wobei ferner das Werkstückmaterial (28) zwischen den schneideneden Arbeitsgängen durch wenigstens zwei quer zur Materialvorschubrichtung (7) öffen- und schließbare und in Materialvorschubrichtung (7) an der Zuführeinrichtung (6) verschiebbarer Vorschubbacken (21, 22) vorschiebbar ist,
die nach dem Schließen der Spannbacken (18, 19) und vor Beendigung des schneidenden Arbeitsganges öffenbar, um den Betrag des nächsten Werkstückvorschubes von der Schnittebene (15) fort verschiebbar und wieder schließbar sind
und durch die das Werkstückmaterial (28) für den auf den schneidenden Arbeitsgang folgenden Rückhub des Sägebandes (9) auf der Zufuhrseite der Schnittebene (15) von der Schnittebene beabstandbar ist,
und wobei das Sägeband (9) durch von neben dem Werkstückmaterial (28) angeordneten Führungsarmen (12, 13) getragenen Führungen (16, 17) in die Schnittebene (15) schwenkbar und während des schneidenden Arbeitsganges in dieser gehalten ist,
**dadurch gekennzeichnet,**
**daß** das Sägeband (9) innerhalb der Führungen (16, 17) zwischen Hartmetallgleitstücken (35, 36) bewegbar ist, daß die Hartmetallgleitstücke (35, 36) je am Ende von in den Führungen (16, 17) gelagerten und zwischen Anschlägen äquidistant verstellbaren Stellmitteln (38, 39, 40, 41) angeordnet sind, und daß zum Rückhub des Sägebandes (9) die Hartmetallgleitstücke (35, 36) wenigstens einer der Führungen (16, 17) senkrecht zur Schnittebene (15) von dieser fort in Richtung auf das beabstandete Werkstückmaterial (28) verstellbar sind.

2. Vorrichtung nach Anspruch 1,
**dadurch gekennzeichnet,**
**daß** die Stellmittel hydraulisch oder pneumatisch betätigbare Zylinder-Kolben-Aggregate (40, 41) sind.

3. Vorrichtung nach Anspruch 1 oder 2,
**dadurch gekennzeichnet,**
**daß** die Hartmetallgleitstücke (35, 36) beider Führungen (16, 17) in gleicher Richtung senkrecht zur Schnittebene (15) von dieser fort verstellbar sind.

4. Vorrichtung nach einem der Ansprüche 1 bis 3,
**dadurch gekennzeichnet,**
**daß** wenigstens eine der Führungen (16) zusammen mit dem sie tragenden Führungsarm (12) im wesentlichen in Bewegungsrichtung des schneidenden Trums des Sägebandes (9) an einer Führungsbahn (25) des Gestells (1, 2) der Bandsägemaschine verstellbar ist.

5. Vorrichtung zum Führen eines Sägebandes (9) im Schnittbereich beidseits von zu zertrennendem, stangenförmigem Werkstückmaterial (28) aus Metall bei einer Bandsägemaschine,
wobei das auf einem Werkstücktisch (5) sowie einer diesem in Vorschubrichtung (7) des Werkstückmaterials 28) vorgeschalteten Zuführeinrichtung (6) aufliegende Werkstückmaterial (28) während des Schnittes in Vorschubrichtung (7) gesehen hinter der Schnittebene (15) zwischen wenigstens zwei quer zur Materialvorschubrichtung (7) öffenund schließbaren Spannbacken (18, 19) eingespannt ist,
wobei ferner das Werkstückmaterial (28) zwischen den schneidenden Arbeitsgängen durch wenigstens zwei quer zur Materialvorschubrichtung (7) öffen- und schließbare und in Materialvorschubrichtung (7) an der Zuführeinrichtung (6) verschiebbarer Vorschubbacken (21, 22) vorschiebbar ist,
die nach dem Schließen der Spannbacken (18, 19) und vor Beendigung des schneidenden Arbeitsganges öffenbar, um den Betrag des nächsten Werkstückvorschubes von der Schnittebene (15) fort verschiebbar und wieder schließbar sind
und durch die das Werkstückmaterial (28) für den auf den schneidenden Arbeitsgang folgenden Rückhub des Sägebandes (9) auf der Zufuhrseite der Schnittebene (15) von der Schnittebene beabstandbar ist,
und wobei das Sägeband (9) durch von neben dem Werkstückmaterial (28) angeordneten Führungsarmen (12, 13) getragenen Führungen (16, 17) in die Schnittebene (15) schwenkbar und während des schneidenden Arbeitsganges in diese gehalten ist,
**dadurch gekennzeichnet,**
**daß** wenigstens eine der Führungen (16) zusammen mit dem sie tragenden Führungsarm (12) im wesentlichen in Bewegungsrichtung des schneidenden Trums des Sägebandes (9) an einer Führungsbahn (25) des Gestells (1, 2) der Bandsägemaschine verstellbar ist, daß der verstellbare Führungsarm (12) durch eine in Richtung auf das beabstandete Werkstückmaterial (28) wirksame Kraft beaufschlagbar ist, und daß für den Rückhub des Sägebandes (9) dieser Führungsarme (12) durch diese Kraft verschwenkbar ist.

6. Vorrichtung nach Anspruch 5,
**dadurch gekennzeichnet,**
**daß** der Führungsarm (12) ständig durch die in Richtung auf das beabstandete Werkstückmaterial (28) wirksame Kraft beaufschlagt ist, und daß für den Rückhub des Sägebandes (9) das Führungsspiel dieses Führungsarmes (12) an der Führungsbahn (25) vergrößerbar ist.

7. Vorrichtung nach Anspruch 5 oder 6,
wobei das das Werkstückmaterial während des Schnittes neben der Schnittebene haltende Spannbackenpaar parallel zur Schnittebene durch Bewegung wenigstens einer der Spannbacken öffen- und schließbar ist, und wobei die bewegbare Spannbacke sowie der verstellbare Führungsarm einander zugeordnet sind,
**dadurch gekennzeichnet,**
**daß** die bewegbare Spannbacke (18) wenigstens mittelbar das Widerlager (45) für die am Führungsarm (12) angreifende Kraft (44) bildet.

8. Vorrichtung nach Anspruch 5, 6 oder 7,
**dadurch gekennzeichnet,**
**daß** die am Führungsarm (12) angreifende Kraft eine Federkraft (44) ist.

9. Vorrichtung nach Anspruch 8,
**dadurch gekennzeichnet,**
**daß** die Federkraft durch eine Druckfeder (44) gebildet ist.

## Claims

1. Apparatus for guiding a sawband (9) of a bandsaw in the cutting region on both sides of bar-shaped metal workpiece material (28) which is to be split, wherein the workpiece material (28) resting on a workpiece table (5) and on feeding means (6) disposed upstream of the latter is gripped during cutting behind the cutting plane (15), as viewed in the feed direction (7), between at least two chuck jaws (18, 19) which can be opened and closed transversely with respect to the material feed direction (7), and wherein furthermore between the cutting operations the workpiece material (28) can be fed through at least two feed jaws (21, 22) which can be opened and closed transversely with respect to the material feed direction (7) and are movable on the feeding means (6) in the material feed direction (7), wherein after closing of the chuck jaws (18, 19) and before the end of the cutting operation the said feed jaws can be opened, moved on from the cutting plane (15) by the amount of the next workpiece feed and can be closed again, and wherein the workpiece material (28) can be distanced from the cutting plane (15) by the said feed jaws for the return stroke of the sawband (9) following the cutting operation on the feed side of the cutting plane, and wherein the sawband (9) is pivotable into the cutting plane (15) by guides (16, 17) borne by guide arms (12, 13) disposed adjacent to the workpiece material (28) and is held in the cutting plane during the cutting operation, **characterised in that** the sawband (9) is movable within the guides (16, 17) between hard metal slide blocks (35, 36), that the hard metal slide blocks (35, 36) are each disposed at the end of adjusting means (38, 39, 40, 41) mounted in the guides (16, 17) and are movable equidistantly between stops, and that for the return stroke of the saw band (9) the hard metal slide blocks (35, 36) of at least one of the guides (16, 17) are movable perpendicular to the cutting plane (15) away from the cutting plane in the direction of the distanced workpiece material (28).

2. Apparatus as claimed in Claim 1, **characterised in that** the adjusting means are cylinder/piston assemblies (40, 41) which can be actuated hydraulically or pneumatically.

3. Apparatus as claimed in Claim 1 or 2, **characterised in that** the hard metal slide blocks (35, 36) of both guides (16, 17) are movable away from the cutting plane (15) in the same direction perpendicular to the cutting plane.

4. Apparatus as claimed in one of Claims 1 to 3, **characterised in that** at least one of the guides (16) together with the guide arm (12) bearing it is movable on a guideway (25) of the frame (1, 2) of the bandsaw substantially in the direction of movement of the cutting strand of the sawband (9).

5. Apparatus for guiding a sawband (9) of a bandsaw in the cutting region on both sides of bar-shaped metal workpiece material (28) which is to be split, wherein the workpiece material (28) resting on a workpiece table (5) and on feeding means (6) disposed upstream of the latter is gripped during cutting behind the cutting plane (15), as viewed in the feed direction (7), between at least two chuck jaws (18, 19) which can be opened and closed transversely with respect to the material feed direction (7), and wherein furthermore between the cutting operations the workpiece material (28) can be fed through at least two feed jaws (21, 22) which can be opened and closed transversely with respect to the material feed direction (7) and are movable on the feeding means (6) in the material feed direction (7), wherein after closing of the chuck jaws (18, 19) and before the end of the cutting operation the said feed jaws can be opened, moved on from the cutting plane (15) by the amount of the next workpiece feed and can be closed again, and wherein the workpiece material (28) can be distanced from the cutting plane (15) by the said feed jaws for the return stroke of the sawband (9) following the cutting operation on the feed side of the cutting plane, and wherein the sawband (9) is pivotable into the cutting plane (15) by guides (16, 17) borne by guide arms (12, 13) disposed adjacent to the workpiece material (28) and is held in the cutting plane during the cutting operation, **characterised in that** at least one of the guides (16) together with the guide arm (12) bearing it is movable on a guideway (25) of the frame (1, 2) of the bandsaw substantially in the direction of movement of the cutting strand of the sawband (9), that the movable guide arm (12) can be acted upon by a force acting in the direction of the distanced workpiece material (28), and that for the return stroke of the sawband (9) this guide arm (12) is pivotable by this force.

6. Apparatus as claimed in Claim 5, **characterised in that** the guide arm (12) is continuously acted upon by the force acting in the direction of the distanced workpiece material (28), and that for the return stroke of the sawband the guiding play of this guide arm (12) on the guideway (25) can be increased.

7. Apparatus as claimed in Claim 5 or 6, wherein the pair of chuck jaws holding the workpiece material adjacent to the cutting plane during cutting can be opened and closed parallel to the cutting plane by movement of at least one of the chuck jaws, and wherein the movable chuck jaws and the adjustable guide arm are co-ordinated with one another, **characterised in that** the movable chuck jaw (18) at least indirectly forms the abutment (495) for the force (44) acting on the guide arm (12).

8. Apparatus as claimed in Claim 5, 6 or 7, **characterised in that** the force acting on the guide arm (12) is a spring force (44)

9. Apparatus as claimed in Claim 8, **characterised in that** the spring force is provided by a compression spring (44).

## Revendications

1. Dispositif pour le guidage d'une scie à ruban (9), dans une machine de sciage par ruban, dans la zone de coupe située de part et d'autre d'un matériau métallique travaillé (28) en forme de barre, devant être séparé,
dispositif dans lequel le matériau travaillé (28), reposant sur un plateau (5) porte-pièces, ainsi que sur un système d'amenée (6) situé en amont dudit plateau dans la direction d'avance (7) dudit matériau travaillé (28), est enserré durant la coupe, derrière le plan de coupe (15) en observant dans la direction d'avance (7), entre au moins deux mâchoires de serrage (18, 19) pouvant être ouvertes et fermées transversalement par rapport à la direction (7) d'avance du matériau ;
dans lequel par ailleurs, entre les opérations de coupe, le matériau travaillé (28) peut être avancé par au moins deux mâchoires d'avance (21, 22) qui peuvent être ouvertes et fermées transversalement par rapport à la direction (7) d'avance du matériau, peuvent coulisser sur le système d'amenée dans ladite direction (7) d'avance du matériau,
peuvent être ouvertes après la fermeture des mâchoires de serrage (18, 19) et avant l'achèvement de l'opération de coupe, peuvent être éloignées progressivement du plan de coupe (15), de la course d'avance successive de la pièce, puis être refermées,
et par l'intermédiaire desquelles le matériau travaillé (28) peut être éloigné du plan de coupe en vue de la course rétrograde de la scie à ruban (9) succédant à l'opération de coupe, sur le côté amenée dudit plan de coupe (15);
et dans lequel la scie à ruban (9) peut parvenir dans le plan de coupe (15), par pivotement, au moyen de guides (16, 17) portés par des bras de guidage (12, 13) disposés à côté du matériau travaillé (28), et est maintenue dans ledit plan au cours de l'opération de coupe,
**caractérisé par le fait**
**que** la scie à ruban (9) est mobile à l'intérieur des guides (16, 17), entre des pièces de glissement (35, 36) en métal dur ; par le fait que lesdites pièces de glissement (35, 36) en métal dur sont respectivement situées à l'extrémité de moyens de réglage (38, 39, 40, 41) montés dans les guides (16, 17) et pouvant être ajustés de manière équidistante, entre des butées ; et par le fait que, en vue de la course rétrograde de la scie à ruban (9), les pièces de glissement (35, 36) en métal dur d'au moins l'un des guides (16, 17) peuvent être déplacées perpendiculairement au plan de coupe (15), avec éloignement progressif en direction du matériau travaillé (28) situé à distance.

2. Dispositif selon la revendication 1,
**caractérisé par le fait**
**que** les moyens de réglage sont des vérins (40, 41) actionnables hydrauliquement ou pneumatiquement.

3. Dispositif selon la revendication 1 ou 2,
**caractérisé par le fait**
**que** les pièces de glissement (35, 36) en métal dur des deux guides (16, 17) peuvent être déplacées perpendiculairement au plan de coupe (15), dans la même direction, en s'éloignant progressivement dudit plan.

4. Dispositif selon l'une des revendications 1 à 3,
**caractérisé par le fait**
**qu'**au moins l'un (16) des guides peut être déplacé sur une piste de guidage (25) du bâti (1, 2) de la machine de sciage par ruban, conjointement au bras de guidage (12) qui le porte, pour l'essentiel dans la direction de mouvement du brin sectionneur de la scie à ruban (9).

5. Dispositif pour le guidage d'une scie à ruban (9), dans une machine de sciage par ruban, dans la zone de coupe située de part et d'autre d'un matériau métallique travaillé (28) en forme de barre, devant être séparé,
dispositif dans lequel le matériau travaillé (28), reposant sur un plateau (5) porte-pièces, ainsi que sur un système d'amenée (6) situé en amont dudit plateau dans la direction d'avance (7) dudit matériau travaillé (28), est enserré durant la coupe, derrière le plan de coupe (15) en observant dans la direction d'avance (7), entre au moins deux mâchoires de serrage (18, 19) pouvant être ouvertes et fermées transversalement par rapport à la direction (7) d'avance du matériau ;
dans lequel par ailleurs, entre les opérations de coupe, le matériau travaillé (28) peut être avancé par au moins deux mâchoires d'avance (21, 22) qui peuvent être ouvertes et fermées transversalement par rapport à la direction (7) d'avance du matériau, peuvent coulisser sur le système d'amenée dans ladite direction (7) d'avance du matériau,
peuvent être ouvertes après la fermeture des mâchoires de serrage (18, 19) et avant l'achèvement de l'opération de coupe, peuvent être éloignées progressivement du plan de coupe (15), de la course d'avance successive de la pièce, puis être refermées,
et par l'intermédiaire desquelles le matériau travaillé (28) peut être éloigné du plan de coupe en vue de la course rétrograde de la scie à ruban (9) succédant à l'opération de coupe, sur le côté amenée dudit plan de coupe (15);
et dans lequel la scie à ruban (9) peut parvenir dans le plan de coupe (15), par pivotement, au moyen de guides (16, 17) portés par des bras de guidage (12, 13) disposés à côté du matériau travaillé (28), et est maintenue dans ledit plan au cours de l'opération de coupe,
**caractérisé par le fait**
**qu'**au moins l'un (16) des guides peut être déplacé sur une piste de guidage (25) du bâti (1, 2) de la machine de sciage par ruban, conjointement au bras de guidage (12) qui le porte, pour l'essentiel dans la direction de mouvement du brin sectionneur de la scie à ruban (9); par le fait que le bras réglable de guidage (12) peut être sollicité par une force agissant en direction du matériau travaillé (28) situé à distance ; et par le fait que ce bras de guidage (12) peut être animé d'un pivotement, par ladite force, en vue de la course rétrograde de la scie à ruban (9).

6. Dispositif selon la revendication 5,
**caractérisé par le fait**
**que** le bras de guidage (12) est sollicité, en permanence, par la force agissant en direction du matériau travaillé (28) situé à distance ; et par le fait que le jeu de guidage de ce bras de guidage (12), sur la piste de guidage (25), peut être augmenté en vue de la course rétrograde de la scie à ruban (9).

7. Dispositif selon la revendication 5 ou 6,
dans lequel la paire de mâchoires de serrage, retenant le matériau travaillé à côté du plan de coupe lors de la coupe, peut être ouverte et fermée parallèlement audit plan de coupe, par mouvement d'au moins l'une desdites mâchoires de serrage ;
et dans lequel la mâchoire mobile de serrage, ainsi que le bras réglable de guidage, sont mutuellement associés,
**caractérisé par le fait**
**que** la mâchoire mobile de serrage (18) forme, au moins indirectement, la contre-butée (45) affectée à la force (44) appliquée au bras de guidage (12).

8. Dispositif selon la revendication 5, 6 ou 7,
**caractérisé par le fait**
**que** la force appliquée au bras de guidage (12) est une force élastique (44).

9. Dispositif selon la revendication 8,
**caractérisé par le fait**
**que** la force élastique est développée par un ressort de pression (44).
